# EUROPEAN PATENT SPECIFICATION

(11) **EP 0 509 558 B1**
(45) Date of publication and mention of the grant of the patent: **13.01.1999**
(21) Application number: 92111430.2
(22) Date of filing: 06.05.1986
(51) Int. Cl.: G06F 9/26, G06F 9/34, G06F 9/38

(54) **Information processing system with support means responsive to an overall system control**
Informationsverarbeitungsanlage mit gesamtsystemsteuerungsabhängigem Unterstützungsmittel
Système de traitement d'information avec moyen d'assistance répondant à des commandes de système globales

(30) Priority: 06.05.1985 US 730977
(43) Date of publication of application: 21.10.1992
(62) Divisional of application: 86106180.2
(73) Proprietor: WANG LABORATORIES, INC., Billerica, MA 01821 (US)
(72) Inventor: Whipple, David L., Braintree, MA 02184 (US)
(74) Representative: Behrens, Dieter, Dr.-Ing.

(56) References cited:
- WO-A-83/00759
- US-A- 4 204 252
- IBM TECHNICAL DISCLOSURE BULLETIN. vol. 27, no. 11, April 1985, NEW YORK US pages 6600 - 6603 'Extended functions of a service processor'
- A.I.M. BULLETIN SCIENTIFIQUE, no. 4, 1982, LIEGE,BE pages 131 - 136 P BALTHASART 'Development of low cost emulator for microprocessor Z80'

## Description

### BACKGROUND OF THE INVENTION

The present invention relates to apparatus and method for enchancing the performance of an information processing system and, more particularly, to apparatus for enhancing support operation execution, comprising the features recited in the preamble of claim 1.

A primary limitation in the speed of operation of an information processing system is that imposed by the time required to move information, that is, instructions and data, between memory and the information processing elements. For example, instructions and data must be moved from memory to the processor to be acted upon and the results moved from the processor to memory.

The prior art has used caches and prefetch mechanisms to increase the speed with which instructions and data are moved from memory to the processor but, in general, have not addressed certain related problems. For example, system support operations, such as loading of microcode and diagnostic operations, comprise an important family of data processing related operations and which bear upon the overall performance of the system. The efficiency and power with which such support operations are performed thereby effect system performance but are related to secondary treatment in most systems.

The article "Extended functions of a service processor" in IBM TECHNICAL DISCLOSURE BULLETIN, vol. 27, no. 11, April 1985, pages 6600 - 6603, describes a system having the features recited in the preamble of claim 1. A central processing unit (CPU) of this system may send commands to a service processor wherein the commands halt the execution of instructions by the CPU and interrupt operation of the service processor so that the service processor may read and write CPU registers and perform CPU assist tasks, such as hardware emulation and assist operations. For this purpose, sequences of commands are issued on a Service Interface bus between the CPU and the service processor. US-A-4 204 252 teaches a system comprising a writable control store and a secondary control store, the secondary control store controlling routines to load the writable control store with microroutines and to return control of the system to the writable control store when the writable control store is loaded.

The article "Development of a low cost emulator for microprocessor Z80" by P. Balthasart in A.I.M. BULLETIN SCIENTIFIQUE, no. 4, 1982, pages 131 - 136, discloses a system having a CPU performing in-circuit emulation by means of external commands that access registers internal to the CPU.

WO-A-83/00759 teaches a system wherein a processor can be put into a diagnostic mode by an interrupt, thereby allowing an external host to access internal registers of the processor to command reads and writes of addresses and data.

In general terms, the invention solves the problem of providing means for performing efficiently system support operations, such as loading of microcode and diagnostic operations.

More precisely, the technical problem to be solved by the invention is first that of providing a means for initializing and loading a data processing system that is, in so far as possible, essentially independent of the operation of the data processing system and, second, that of providing a means for diagnostic operation and control of a data processing system at the individual microinstruction level.

In a further aspect of the system the processor includes a microinstruction control means responsive to the instructions for providing microinstructions for controlling operation of the processor means. The microinstruction control means includes microinstruction memory means responsive to microinstruction addresses for storing and providing the microinstructions, first microinstruction address means responsive to the instructions for providing the initial addresses of microinstruction sequences, and second microinstruction address means responsive to the microinstructions for the sequential selection of microinstructions. The microinstruction control means further includes test condition means for performing tests upon defined conditions of operation of the system and providing an output indicating whether the result of a test is true or false. The second microinstruction address means is responsive to the test output to provide a next microinstruction address if a test is true, and the first microinstruction address means being responsive to the test output to provide a new initial microinstruction address if a test is false.

The system of the invention has system control means for performing support operations, at least one data processing element including data processing means and microcode control means, and support bus means connected from the system control means for conducting information between the system control means and the data processing elements. The processing element includes a support means, having a command register means connected from the support bus means for transferring command words between the element support means and the support bus means, wherein certain of the command words containing control words containing information directing a current mode of operation of the processing element. A control register means is connected from the command register means for storing a control word, and support microcode means is responsive to a command word and a related control word for providing microroutines for controlling a support operation. The processing element microcode control means is responsive to a control word for transferring control of the processing element to the support microcode means.

Each command word preferably includes a first section containing a target field identifying a recipient processing element and a command field identifying a support operation to be executed by the target processing element, and a second section containing either a control word, or an information field containing information to be communicated as a result of a current support operation. The information field may contain a microinstruction address in the processing element microcode control means, a microinstruction read from to to be written into the processing element microcode control means, or data read from or to be written into the data processing means. Each control word preferably includes a mode field containing a bit indicating that the processing element is to operate in a command mode, and wherein operation of the processing element is controlled by the support means.

Further preferred embodiments of the invention are recited in the dependent claims.

Other objects, advantages and features of the present invention will be understood by those of ordinary skill in the art after referring to the following detailed description of the preferred embodiment and drawings, wherein:
Fig. 1 is a block diagram of a computer system incorporating the present invention;
Fig. 2 is a block diagram CPU 122;
Fig. 2A is a block diagram of MS 604;
Fig. 2B is a block diagram of CPU-SLI 666; and
Fig. 2C is a diagrammic representation of SL bus 120.

The following description presents the structure and operation of a computer system incorporating a presently preferred embodiment of the present invention. In the following description, the overall structure and operation of the system will first be presented at an overall block diagram level.

Interconnections between related portions of the system may be indicated in either of two ways. First, to enhance clarity of presentation, interconnections between portions of the system may be indicated by common signal names or references rather than by drawn wires or busses. Secondly, certain figures comprised of multiple drawing pages may be drawn so that the drawing pages comprising that figure may be placed side by side, in the sequence designated by the letter designations of the drawing pages, to comprise a single large figure. In this case, certain busses and connections may be drawn to connect at the edges of the drawing pages and the busses and connections may connect or pass across one or more drawing pages.

Finally, and for clarity of presentation, the leftmost portion of any field, word or instruction will be referred to as the most significant or highest order byte or bit throughout the following descriptions. Similarly, the rightmost portion of any field, word or instruction will be referred to as the least significant or lowest order byte or bit.

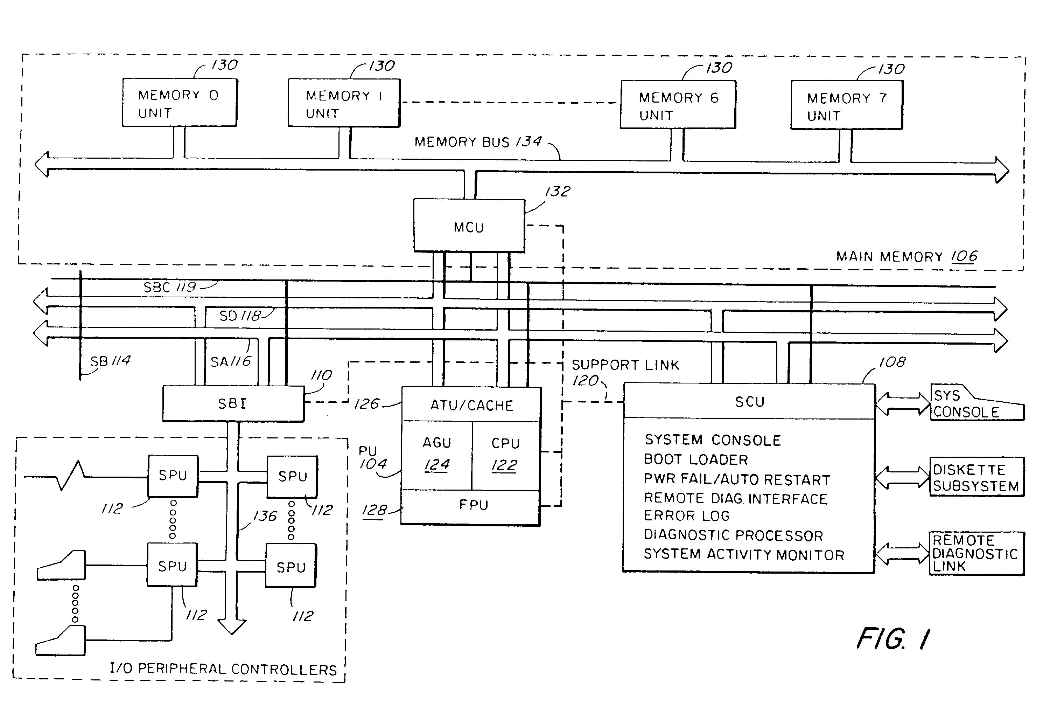

### Block Diagram Structure and Operation (Fig. 1)

Referring to Fig. 1, therein is presented a block diagram of a System 102 incorporating the present invention. As indicated therein, System 102 includes a Processor Unit (PU) 104, a Main Memory (MM) 106, a System Control Unit (SCU) 108, and a System Bus Interface (SBI) 110 with one or more Satellite Processing Units (SPUs) 112. These elements are bidirectionally connected to and interconnected by a System Bus (SB) 114 which is comprised of a bidirectional System Address (SA) Bus 116, a bidirectional Memory Control (MC) Bus 117, a bidirectional System Data (SD) Bus 118 and a System Bus Control (SBC) Link 119. SA Bus 114 and SD Bus 116 provide, respectively, for the transfer of addresses and data among the elements of System 102 while MC Bus 117 provides for the control of MM 106 operations. SBC Link 119 provides a mechanism for controlling access to SB 114 by the various users of SB 114, for example, PU 104, MM 106, SCU 108 and SBI 110. Certain elements of System 102, again, for example, PU 104, SCU 108, MM 106 and SBI 110, are further interconnected through Support Link (SL) Bus 120. As described further below, SL Bus 120 provides access and communication between SCU 108 and the internal operations of certain elements of System 102.

Referring first to PU 104, PU 104 includes a Central Processor Unit (CPU) 122 which executes operations on data under the control of processes, that is, under control of instructions received during execution of a program. As will be described in greater detail in the following, CPU 122 and the associated elements of PU 104 are microprogram controlled, with CPU 122 executing one macroinstruction each CPU cycle and one microinstruction at a time.

CPU 122 primarily performs binary and decimal integer arithmetic and logical operations and executes general instructions of the types described further below. CPU 122 also performs certain address generation operations in support of Address Generator Unit (AGU) 124, for example, instruction address relative calculations. CPU 122 further generates and maintains the system Program Control Word, also described further below. CPU 122 also generates microinstruction branch addresses and performs literal field constant operations using literal fields received from the microcode sequencer, also described in further detail in the following (?). As indicated in Fig. 1, CPU 122 is one of the System 102 elements connected with SL Bus 120.

Associated with CPU 122 is an Address Generator Unit (AGU) 124, which includes, as described in the following, a macroinstruction prefetch and queue mechanism. AGU 124 fetches instructions and generates, from the fields of the instructions, virtual addresses referring to operands to be operated upon by those instructions and dispatch addresses identifying microinstruction routines for executing those instructions. AGU 124 also generates, again from the fields of current instructions, virtual addresses of next instructions to be executed.

As will be described further in the following, AGU 124 and CPU 122 may thereby be respectively described as instruction operation and execution operation units. AGU 124 and CPU 122 operate separately and concurrently to provide overlap of instruction fetching, instruction decoding, operand fetching and instruction execution, thereby enhancing the internal performance of PU 104.

Associated with CPU 122 and AGU 124 is Address Translation Unit/Cache (ATU/C) 126, which operates as the data and address path between PU 104 and SB 114, with CPU 122 and AGU 124 being linked together and to ATU/C 126 by PU 104 internal data and address paths. As previously described, AGU 124 generates virtual addresses, that is, addresses of instructions and operands relative to the address space of an process; a process being an entity for executing programs for a user and being represented by an address space and a current state of execution of a program. ATU/C 126 operates with respect to AGU 124 to translate virtual addresses into corresponding physical addresses within System 102's address space, for example, for reads from and writes to MM 106. ATU/C 126 also operates as a cache mechanism with respect to CPU 122, that is, fetches and stores operands and instructions in advance of CPU 122 operations. Again, ATU/C 126 operates concurrently with CPU 122 and AGU 124.

PU 104 may further include a Floating Point Unit (FPU) 128 for performing floating point arithmetic operations concurrently with other operations of PU 104, for example, CPU 122. FPU 128 is another System 102 element connected from SL Bus 120.

Referring to MM 106, as indicated in Fig. 1 MM 106 includes one or more Memory Units (MUs) 130 for storing data and instructions and a Memory Control Unit (MCU) 132 which controls the reading and writing of data and instructions from and to MUs 130. MCU is connected from SA Bus 116, MC Bus 117, SD Bus 118 and SBC Link 119 and is one of the System 102 elements connected from SL Bus 120.

SCU 108 primarily performs overall system control and support operations. As indicated in Fig. 1, SCU 108 may operate as a system console and may provide a diskette subsystem, for example, for the loading of microcode into PU 104. SCU 108 may also provide local diagnostic functions, and may provide a link for remote diagnostics. Other functions of SCU 108 may include power failure and automatic restart functions, error logging and system activity monitoring.

Referring finally to SBI 110 and SPUs 112, SPUs 112 are intelligent controllers/interfaces for peripheral devices, such as printers, communications links, terminals and disc drives. SPUs 112 are in turn connected with SBI 110 through Input/Output (IO) Bus 136. SBI 110 operates, in cooperation with SPUs 112, as a communications interface between IO Bus 136 and System Bus 114 to transfer information between the peripheral devices and the elements of System 102.

As will be described in detail in the following, Processor Unit (PU) 104 includes facilities for addressing Main Memory (MM) 106, for fetching and storing information, for arithmetic and logical processing of data, for sequencing instructions in the desired order, and for initiating communication between MM 106 and external devices.

### Detailed Description of PU 104

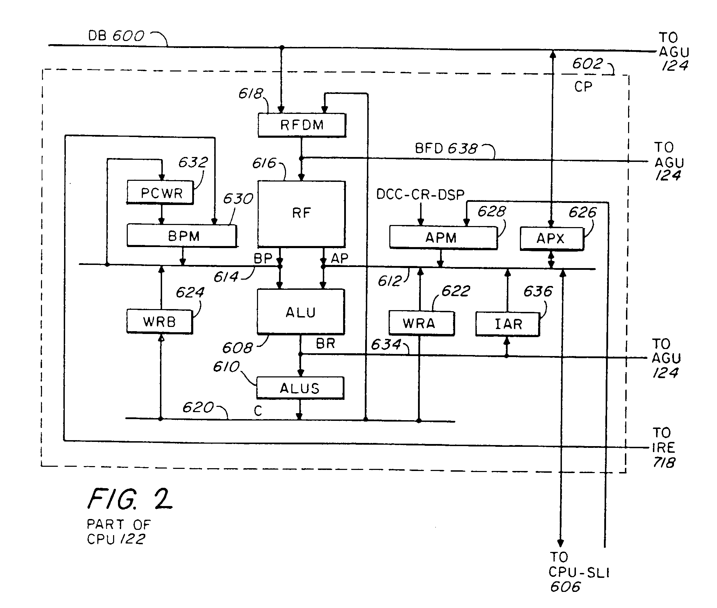

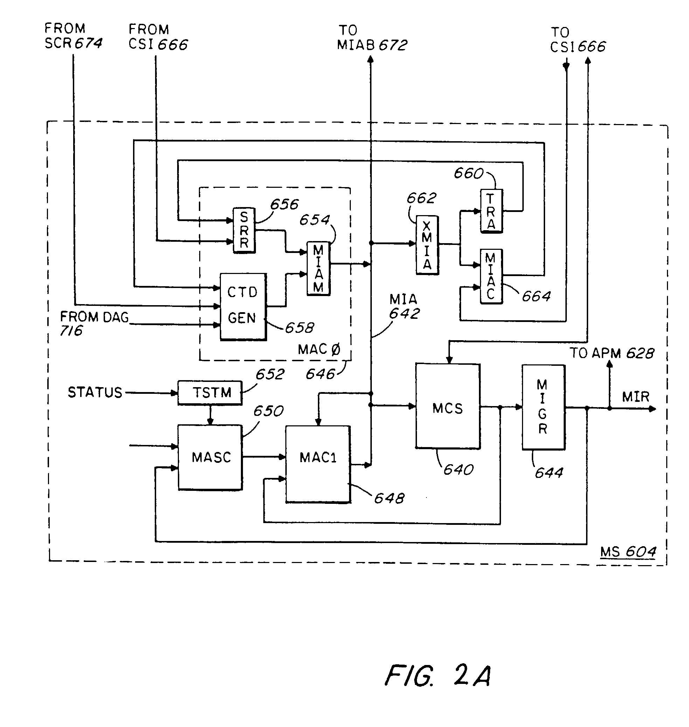

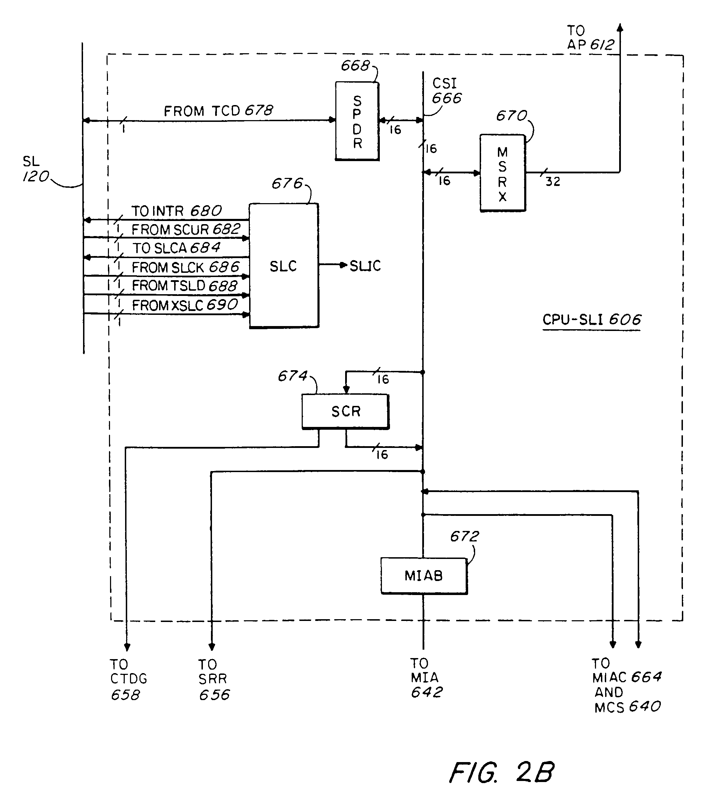

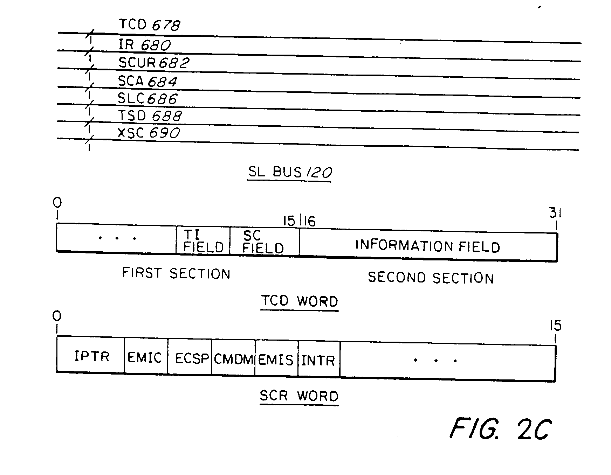

Referring to Figs. 2 and 2A, therein are presented more detailed block diagrams of, respectively, CPU 122, AGU 124 and ATU/C 126, which will be described below in that order.

Fig. 2A may be placed below Fig. 2 to comprise an overall block diagram of those portions of PU 104.

As previously described, AGU 124 and CPU 122 operate separately and concurrently, together with ATU/C 126, to provide overlap of instruction fetching, instruction decoding, operand fetching and instruction execution. The following will describe CPU 122, AGU 124 and ATU/C 126, in that order, and will describe the overall and cooperative operations of these elements. Certain features of some of these elements will, for clarity of presentation, be described after the operation of all three of these elements has been described.

### CPU 122 (Figs. 2 and 2A)

Referring first to Fig. 2 and 2A, CPU 122 executes operations on data under the control of processes, that is, under control of instructions received during execution of a program. As will be described in greater detail in the following, CPU 122 and the associated elements of PU 104 are microprogram controlled, with CPU 122 executing one macroinstruction each CPU cycle and one microinstruction at a time.

CPU 122 performs binary and decimal integer arithmetic and logical operations and executes general instructions of the types described previously. CPU 122 also performs certain address generation operations in support of AGU 124, for example, branch instruction address calculations. CPU 122 further generates and maintains the system Program Control Word. CPU 122 also generates microinstruction branch addresses and performs literal field constant operations using literal fields received from the microcode sequencer, also described in further detail in the following. CPU 122 is one of the System 102 elements connected with SL Bus 120.

As indicated in Figs. 2 and 2A, CPU 122 includes a Central Processor (CP) 602, a Micro-Code Sequencer (MS) 604 and a CPU Support Link Bus Interface (CPU-SLI) 606. MS 604 and CPU-SLI 606, shown in Fig. 2A, will be described further below, after CPU 122, AGU 124 and ATU/C 126 have been described.

Referring to CP 602, CP 602 includes a 32 bit Arithmetic and Logic Unit (ALU) 608 and associated ALU Shifter (ALUS) 610 for performing arithmetic and logic operations, for example, on data and addresses.

Data inputs to ALU 608 are provided through a 32 bit ALU A Input Port and a 32 bit ALU B Input Port connected from, respectively, 32 bit A Port (AP) Bus 612 and 32 bit B Port (BP) Bus 614. As shown in Fig. 2, AP Bus 612 and BP Bus 614 are provided with a plurality of data sources and outputs, which will be described below. One such data source to AP Bus 612 and BP Bus 614 is, respectively, the 32 bit A and B outputs of Register File (RF) 616, which is, in the present embodiment, a 32 bit wide by 256 word register file,

A 32 bit data input to RF 616 is provided from Register File Data Multiplexer (RFDM) 618, which has a first 32 bit input from 32 bit (1 word) Data B (DB) Bus 600 and a second 32 bit input from 32 bit C Bus 620. As will be described further in the following descriptions of AGU 124 and ATU/C 126, DB Bus 600 is PU 104's primary internal data path and links together CPU 122, AGU 124 and ATU/C 126.

C Bus 620 is, as shown in Fig. 2, connected from the 32 bit output of ALUS 610. The path from C Bus 620 to RFDM 618 is provided to allow the results of ALU 608 and ALUS 610 operations to be returned to the data input of RF 616, for example, for reiterative operations.

Also connected from C Bus 620 are a 32 bit Working Register A (WRA) 622 and a 32 bit Working Register B (WRB) 624, the outputs of WRA 622 and SRB 624 being connected respectively to AP Bus 612 and BP Bus 614. These data paths allow the results of ALU 608 and ALUS 610 operations to be returned to, respectively, AP Bus 612 and BP Bus 614, for example, to the A and B Port inputs of ALU 608 or to the Program Control Word Register, described below.

A 32 bit bidirectional data path is provided between AP Bus 612 and DB Bus 600 through bidirectional A Port Transceiver (APX), thereby allowing data to be transferred between DB Bus 600 and AP Bus 612. This path may be used, for example, to transfer the results of ALU 608/ALUS 610 operations to DB Bus 600 or to transfer data from DB Bus 600 to the A Input Port of ALU 608.

AP Bus 612 and BP Bus 614 are provided with further data sources from A Port Multiplexer (APM) 628 and B Port Multiplexer (BPM) 630 which may selectively transfer information from a plurality of sources onto, respectively, AP Bus 612 and BP Bus 614. As will be described next below, the data sources associated with BP Bus 612 are primarily concerned with arithmetic operations and, as in part described above, with data transfers between CP 602 and DB Bus 600, that is, with operations on data. The data sources associated with AP Bus 614 are primarily concerned with the system Program Control Word and instruction address calculations, that is, with control of system operation.

Referring first to APM 628, a first input of APM 628 is comprised of decimal correction constants DCC used in performing decimal arithmetic operations in the binary ALU 608/ALUS 610, as is well known to those of ordinary skill in the art. Other connections to this first input may include inputs CR from the control registers previously described and displacement fields DSP used in address calculations. A second input of APM 628 is, as also known in the art, comprised of general purpose microinstruction literal field bits provided from MS 604. This path may be used, for example, to provide literal constants, in generating microinstruction branch addresses or for manipulating the machine's internal registers, for example, the Program Control Word Register described below. It should be noted that, as shown in Figs. 2 and 2A, AP Bus 612 is also provided with a bidirectional connection from CPU-SLI 606, which will be described in the following description of CPU-SLI 606.

Referring to BPM 630, as indicated in Fig. 2 a first input to BPM 630 is a 32 bit input from AGU 124 representing the instruction currently being executed. A second input is comprised of combinations of 32 of the 64 bits of the current Program Control Word (PCW) which resides in the 64 bit PCW Register (PCWR) 632, these 32 bits comprising those portions of the PCW representing the instruction currently being executed. As further shown in Fig. 2, PCWR 632 is provided with a 32 bit input from BP Bus 614; this PCWR 632 input comprises that portion of the PCW representing the instruction currently being executed and, in general, corresponds to the 32 bits provided from PCWR 632 to BPM 630. The CP 602 paths comprising the current instruction inputs from AGU 124 and PCWR 632 and the current instruction output to PCWR 632 thereby provide a means by which CP 602 may manipulate the PCW and current instruction. As previously described, these PCW and instruction manipulation operations may include address generation operations in support of AGU 124, for example, instruction address relative calculations and branch address operations.

Associated with the above described BP Bus 614 connections and operations is, as shown in Fig. 2, a 32 bit output provided from the output of ALU 608 to an input of AGU 124 through Buffered Register (BR) Bus 634. This path is the means by which CP 602 may provide, for example, branch addresses calculated by CP 602 directly to AGU 124.

As shown in Fig. 2, an Instruction Address Register (IAR) 636 is connected from BR Bus 634 and to AP Bus 612. IAR 636 is comprised of two address registers connected in sequence. The first register, having an input connected from BR Bus 636, is a Next Instruction Address Register and stores the address of the instruction to be next executed. The Next Instruction Address Register operates as an increment by 2 or 4 counter to generate next instruction addresses, the incrementing being controlled by microcode routines in response to information from AGU 124 regarding the size, that is, 32, 48 or 64 bits, of the instruction currently being executed.

The second IAR 636 register, having an input connected from the output of the Next Instruction Address Register and an output connected to AP Bus 612, is an Instruction Address Executing Register storing the address of the instruction currently being executed. As described further below, these registers, and in particular the Next Instruction Address Register, comprise a part of the PCW and are used, for example, in instruction branching operations. As will be described in a following description of ATU/C 126 and the cooperative operations of CPU 122, AGU 124 and ATU/C 126, instruction addresses are generated, during normal, sequential execution of instructions, by ATU/C 126.

Finally, and as shown in Fig. 2, a file data output is provided from CP 602 to AGU 124 through Buffered File Data (BFD) Bus 638, which is connected from the output of RFDM 618. This path allows data to be written into the AGU 124 Register File, in the same manner as into RF 616. Examples of such data include addressing data from DB Bus 600 and the results of CP 602 address calculations, such as general register and base addresses, as previously described.

### Microsequencer (MS) 604 (Fig. 2A)

As previously described, PU 104 is a microcode controlled machine which executes operations on data under the control of processes, that is, under control of instructions received during execution of a program. This microcode control is provided by MS 604 in response, for example, to dispatch addresses provided from AGU 124's DAG 716 and to certain conditions and tests arising during operation of PU 104.

Referring to Fig. 2A, therein is presented a block diagram of MS 604. Fig. 2B, containing CPU-SLI 606, may be placed directly below Fig. 2 and Fig. 2A, containing MS 604, placed directly below Fig. 2B, thereby more clearly illustrating the connections and relationships between MS 604, CPU-SLI 606, CP 602, AGU 124 and ATU/C 126.

As shown in Fig. 2A, MS 604 includes a Microroutine Control Store (MCS) 640 for storing microroutines for controlling the operation of PU 104. In the present embodiment, MCS 640 is comprised of two banks of microcode control store, a first bank being comprised of a Read Only Memory (ROM) for storing permanently resided microroutines and the second bank being a read/write memory for loadable microcode. Each bank is, in the present embodiment, an 84 bit wide by 4K word memory.

The writable bank of MCS 640 is provided with a bidirctional data input/output connected from the CPU-SLI 606 internal bus, described further below. This path, together with CPU-SLI 606, SL Bus 120 and SCU 108, is the path by which microcode may be written into or read from MCS 640.

As also shown in Fig. 2A, MCS 640 is provided with an address input connected from Microinstruction Address (MIA) Bus 642. As will be described below, microinstruction addresses are provided through MIA Bus 642 to select and read individual microinstructions from MCS 640 and, during a loading of microcode into MCS 640, to control the writing of microcode into MCS 640.

The microinstruction output of MCS 640 is connected to the input of Microinstruction Generator and Register (MIGR) 644. MIGR 644 contains a register to store the current microinstruction and logic decoding the current microinstruction to provide microinstruction machine control output signals Microinstruction Register (MIR). Outputs MIR are in turn provided to the remainder of PU 104 for control purposes and, as previously described, as a microinstruction literal output to an input of APM 628. A part of MIGR 644's control output is provided as an input to MIGR 644 to control, in part, the operation thereof. MIGR 644 is of conventional internal design and will not be described in further detail herein as such are well known to those of ordinary skill in the art.

Microinstruction addresses may be provided to MIA Bus 642 from either of two address sources having microinstruction address outputs connected to MIA Bus 642. These sources are respectively designated as Microinstruction Address Control 0 (MACO) 646 and Microinstruction Address Control 1 (MACI) 648.

Referring first to MACI 648, MACI 648 essentially controls the sequential selection of microinstructions in microroutines, the operation of microinstruction stack operations, and microinstruction loop operations. For this purpose, MACl 648 includes a microinstruction counter, a microinstruction stack and a microinstruction loop counter, it certain associated control functions. MACl 648 is provided with control inputs and microinstruction branch addresses from the output of MCS 640 and microinstruction addresses from MIA Bus 642 as required for the operation thereof. MACI 640 is further provided with control inputs from Microinstruction Address Select and Control (MASC) 650, described below. MACI 648 is again of conventional internal design and will not be described in further detail herein.

The operation of MACl 648 is primarily controlled by MASC 650, which receives, for example, inputs indicating the results of tests, the end of a cycle, and global address select conditions, and control inputs from the output of MIGR 644. Associated with MASC 650 is Test Multiplexer (TSTM) 652, which receives status bit inputs and provides to MASC 650 a test output representing the results of status related tests. Among the outputs generated by MASC 650 are an indication of test condition results, certain control signals to the other elements of MS 604, and certain system clock signals.

Among the clock signals provided by MASC 650, which will be described further in a following description of the fetching of instructions and operands from ATU/C 126, are a System Clock (SYSCLK) and a CPU 122 Clock (CPUC). SYSCLK provides the fundamental timing for logical operations of the elements of PU 104 and, in the present implementation of System 102, has a period of 60 nanoseconds (ns). CPUC is generated in response to the operation of CPU 122 and essentially represents the state of execution of CPU 122 operations. In the present embodiment of System 102, a CPUC cycle is the time required to perform a single operation, that is, to execute a single instruction. As described in detail in a following description of instruction and operand fetching, the start of the execution of an instruction is indicated by a rising edge of CPUC and the end of the CPUC period, that is, the beginning of the next CPUC period, is indicated by the next rising edge of CPUC indicating the start of execution of the next instruction. The basic period of CPUC, that is, the time required to execute a single instruction, is 120 ns. A CPUC period may, however, be extended in 60 ns increments, that is, in SYSCLK periods, as required for certain operations, for example, as the result of a microcode branch or when it is necessary for DC 804 to fetch a requested operand or instruction from MM 106.

Referring now to MACO 646, MACO 646 provides microinstruction addresses upon dispatches and the occurrence of trap conditions or case tests. MACO 646 microinstruction addresses are provided from the output of Microinstruction Address Multiplexer (MIAM) 654 which, in turn, receives inputs from Microinstruction Save/Return Register (SRR) 656 and Case/Trap/Dispatch Generator (CTDG) 658.

Considering first SRR 656, SRR 656 provides a microinstruction address save and return mechanism and is provided with save/return microinstruction addresses from Trap Return Register (TRA) 660. TRA 660, in turn, receives and saves microinstruction addresses appearing on MIA Bus 642 through Execute Microinstruction Address Register (XMIA) 662, which captures and stores the address appearing on MIA Bus 642 of the microinstruction currently to be executed. SRR 656 also provides, as described more fully in the following description of CPU-SLI 606, a path through which microinstruction addresses may be provided to MCS 640 from either SL Bus 120 or CP 602. As shown in Fig. 2A, this path is comprised of an input to SRR 656 from CPU-SLI 606's internal bus, CSI 666, and may be used, for example, in writing microroutines into MCS 640 or in diagnostic operations.

CTDG 658 generates microinstruction addresses upon dispatch, case and trap conditions. As indicated in Fig. 2A, the dispatch address input of CTDG 658 is provided from DAG 716. Other dispatch operations resulting in the generation of microinstruction addresses include dispatch exceptions, for example, resulting from the detection of an invalid address by DAG 716, or operations to select particular file registers or to perform a floating point operation. As will be described below with reference to CPU-SLI 606, CTDG 658 is also provided with an input from CPU-SLI 606, specifically from CPU-SLI 606's SCR 674.

Trap vector microinstruction addresses may result, for example, from an invalid effective address, a long address translation, a cache block crossing, a control exception, a fetch operation, or other general trap conditions. Case tests resulting in a microinstruction address include, for example, operations for normalization of variables, to compare floating point variables or floating point exponent differences, to map the instruction queue, to examine an ALU result, or general control exceptions.

As indicated in Fig. 2A, one input to CTGD 658 is provided from Microinstruction Address Comparator (MIAC) 664. MIAC 664 has a first input connected from XMIA 662 and representing the current microinstruction address and a second input connected from the internal bus of CPU-SLI 606, described further below. A selected microinstruction address may be stored in a CPU-SLI 606 register and compared by MIAC 664 to each current microinstruction address appearing at the output of XMIA662. MIAC 664 will then generate an output to CTDG 658 when the current microinstruction compares to the stored microinstruction address, thereby providing, for example, trip points at selectable microinstruction addresses. This facility may be used, for example, in diagnostic operations for sequentially stepping through microinstruction routines or in halting operation of MS 604 at selected microinstructions.

As described above, MACO 646 generates microinstruction addresses for dispatch, case and trap conditions while MACI 648 generates microinstruction addresses for the sequential selection of microinstructions in microroutines, for microinstruction stack operations and for microinstruction loop operations. Either MACO 646 or MACI 648 may be the microinstruction address source during a given microinstruction cycle and either will provide such an address within a single cycle. The provision of two separate and parallel microinstruction address sources for these two classes of microinstruction selection operations allows, as described below, microcode branch operations to be performed in a single microinstruction cycle.

Microcode branches generally arise from the result of performing a test upon defined conditions or states. If the test result is, for example, true, the current microroutine will continue with the next microinstruction address. If the test is false, a microinstruction address for a branch microroutine is generated and used as the next microinstruction address.

In a conventional microinstruction machine a first microinstruction cycle is used to generate a test condition and a second microinstruction cycle is used to perform the test and select, if necessary, a microinstruction branch. In MS 604, and because of the parallel concurrently operating address sources MACO 646 and MACl 648, the test is generated and performed, by MACO 646, during a single microinstruction cycle. If the test condition is true, the address already generated by MACl 648 is used, during that cycle, as the next microinstruction address. If the test condition is false, the microinstruction cycle is extended and the address generated by MACO 646 used as the next microinstruction address. It should be noted that the test results may be reversed with respect to branch/no branch decisions without altering the principle of operation of MS 604. That is, a true test result may result in a branch and a false result in a no branch.

In as much as a test resulting in a branch uses an extended microinstruction cycle, the overall increase in MS 604 operating speed will be dependent upon the percentage of branches occurring in normal operation. The lower this percentage, the greater the advantage in operating speed. The microcode designer should therefore, by experience or test, select test conditions and construct the microinstruction routines so as to maximize the percentage of test results, whether true or false, resulting in no branch decisions.

Having described the structure and operation of MS 604, the structure and operation of CPU-SLI 606 will be described next below.

### CPU System Link Interface (CPU-SLI) 606 (Figs. 2A, 2B and 2C)

As previously described, certain elements of System 102, for example, PU 104, SCU 108, MM 106 and SBI 110 are interconnected through Support Link (SL) Bus 120 to provide access and communication between SCU 108 and the internal operations of these elements. This access and communication is used, as described below, primarily to control the execution of what are generally classified as Support operations, for example, the initialization and loading of microcode and diagnostic operations. CPU-SLI 606, for example, is the link between CPU 122 and SL Bus 120 and thereby provides a link between SCU 108 and the elements of CPU 122, in particular CP 602 and MS 604.

While the following description will focus on the example presented by CPU-SLI 606, it should be remembered that the general structure and operation of CPU-SLI 606 is representative of the system link interface provided in each of the information processing elements of System 102. That is, the system link interface in, for example, an MCU 132; will be similar to CPU-SLI 606, with certain adaptations, which will be apparent to those of ordinary skill in the art, for the specific operations and control requirements of the particular information processing element.

In this regard, it should be noted that the information processing elements of System 102 are similar in that each will include information processing functions, including a means for storing information, a means for processing information and busses for transferring the information among the storage and processing means, and a microcode control "engine" similar to MS 604. In this respect, the microcode control engine will include a memory means for storing microroutines, that is, sequences of microinstructions, a means for addressing the microcode memory, microinstruction busses interconnecting the memory and address means.

CP 602 and MS 604 have been described above as, respectively, the information processing function and microcode control engine of CPU 122, wherein RF 616 and ALU 608 provide, respectively, the information storage and processing means. In further example, the function of MEM 106 is to store information, including data and programs, and to transfer information between the elements of System 102. As such, MEM 106 will include a microcode control engine similar to MS 604, storage means in the form of MUs 130, and information processing means, that is, means to transfer information between the MUs 130 and the elements of System 102, in the form of the data paths, registers and processing functions, such as parity checking logic, of MCU 132.

The following will first describe the general structure and operation of CPU-SLI 606, and then will describe SL Bus 120, the information and commands communicated therethrough, and the Support operations performed by these elements. The description of SL Bus 120 and the Support operations will in turn describe the functions and operations of the elements of CPU-SLI 606 in detail. The structure and operation of SCU 108 will not be described in detail as SCU 108 is a commercially available microprocessor based computer, in the present example a Professional Computer from Wang Laboratories, Inc. of Lowell, MA, and the structure and operation of such a unit and its' adaptation to the present purposes will be well understood by those of ordinary skill in the art after the following descriptions.

Referring to Fig. 2B, a block diagram of CPU-SLI 606 is presented therein. In the following, the structure of CPU-SLI 606 will be described first, followed by a description of certain of the possible operations of CPU-SLI 606 and certain possible uses of the data paths therethrough. As described above, the specific functions and operations of these elements will be described in detail through the following descriptions of SL Bus 120 and the Support Command operations.

As shown therein, CPU-SLI 606 includes a 16 bit CPU Support Link Internal (CSI) Bus 666 which is bidirectionally connected to SL Bus 120 through Support Packet Data Register (SPDR) 668 to allow control and data information to be communicated between SLI Bus 120 and CSI Bus 666. As will be described further below, SPDR 668 is a 16 bit register having a parallel 16 bit input output to CSI Bus 666 and a single bit wide serial input/output connection to the data bus portion of SL Bus 120. That is, information is conducted between SPDR 668 and SCU 108 in serial form and is conducted between SPDR 668 and CSI Bus 666 is 16 bit parallel form.

CSI Bus 666 is in turn, as previously described, bidirectionally connected to AP Bus 612 in CP 602 through 32 bit bidirectional Micro-State Register/Transceiver (MSRX) 670. As indicated in Fig. 2B, MSRX 670 has a 32 bit parallel interface to AP Bus 612 and a 16 bit interface to CSI 666, so that information is transferred between CSI 666 and MSRX 670 in the form of high and low 16 bit "words" of the 32 bits of MSRX 670.

CSI 666 is further interconnected with certain points in MS 604. As shown in Figs. 2A and 2B, CSI 666 is connected from MIA Bus 642 through Micro-Instruction Address Buffer (MIAB) 672. CSI Bus 666 is further connected, also as previously described, to a data input/output of MCS 640 by a bidirectional link and is connected to address inputs of MIAC 664 and SRR 656.

CPU-SLI 606 further includes a 16 bit general purpose Support Command Register (SCR) 674 having an input connected from CSI Bus 666 and an output connected to CSI Bus 666. SCR 674 may be used to store and provide to CSI Bus 666 instructions, addresses or data appearing on CSI Bus 666. In the present case, and as described below, SCR 674 is used to store information controlling the operation of CPU-SLI 666 and MS 604 in performing Support operations. In this regard, and as shown in Figs. 2A and 2B, SCR 674 provides a control signal output to CTDG 658.

Finally, CPU-SLI 606 includes a microcode control "engine", designated as Support Link Control (SLC) 676, which is, as described below, interconnected with the individual support link control lines of SL Bus 120 and provides control outputs Support Link Interface Control (SLIC) to CPU-SLI 606 and MS 604. SLC 676 essentially contains the microroutines and associated logic necessary to control CPU-SLI 606 and MS 604 in performing the below described Support operations. As the design and structure of SLC 676 will be apparent to one of ordinary skill in the art after the following descriptions of the operation of CPU-SLI 606 and the Support operations, SLC 674 will not be described in further detail herein.

Having described the structure of CPU-SLI 606, certain of the possible operations of CPU-SLI 606 and certain possible uses of the information paths through CPU-SLI 606 will be described next below.

Considering first the link from SL Bus 120 to AP Bus 612 through SPDR 668, CSI Bus 666 and MSRX 670, this path may be used, for example, in CP 602 diagnostic operations. That is, this path provides general purpose access between SL Bus 120, and thus, SCU 108, and the internal data and micro state of CP 602.

The bidirectional path between CSI Bus 666 and the data input/output of MCS 640 is the path through which microroutines are written into MCS 640. This path also allows microinstructions to be read, for example, from MCS 640 to SL Bus 120 or to CP 602 through, respectively, SPDR 668 and MSRX 670 for diagnostic purposes. The path from MCS 640 data input/output and through MSRX 670 also provides an alternate path to that between the MIR output of MIGR 644 and AP Bus 612 whereby microinstruction fields may be read to CP 602.

The path from CSI Bus to an address input of SRR 656, and thus to MIA Bus 642 may be used in cooperation with the above described input/output path between CSI Bus 666 and MCS 640 to provide address inputs to MCS 640 to write microroutines into MCS 640 and to read microinstructions from MCS 640. Microinstruction addresses may be provided through this path from either SL Bus 120 through SPDR 668 or from CP 602 through MSRX 670. In this regard, it should be noted that the address path from MIA Bus 642 to CSI 666 through MIAB 672 may be used, for example, together with the path from the data input/output of MCS 640 to CSI Bus 666, to monitor microroutines. That is, that microinstruction addresses appearing on MIA Bus 642 and the corresponding microinstructions read from MCS 640 may thereby be read to SL Bus 120 or to CP 602.

Finally, as previously described MIAC 664 is provided with an address input connected from CSI 666. A selected microinstruction address may be stored in, for example, SCR 674 and provided to MIAC 664 through CSI Bus 666 and this link. This address input may be compared to the microinstruction addresses appearing on MIA Bus 642, for example, at the output of XMIA 662. MIAC 664 will then generate an output to CTDG 658 when the current microinstruction address compares to the stored microinstruction address, thereby providing, for example, trip points at selectable microinstruction addresses. This facility may be used, for example, in diagnostic operations for sequentially stepping through microinstruction routines or in halting operation of MS 604 at selected microinstructions.

Having described the basic structure and operation of CPU-SLI 606, the function and operations of CPU-SLI 606, SL Bus 120 and MS 604 in performing Support operations will be described next below.

Referring to Fig. 2C, therein is presented a diagrammic representation of SL Bus 120 and the information and commands communicated therethrough. As indicated in the upper portion thereof, SL Bus 120 is comprised of a single bit serial Target/Command/Data (TCD) Bus 678, which is used to communicate Support operation commands and information between SCU 108 and the information processing elements of System 102, and a plurality of individual control lines.

The individual control lines are used to communicate signals which coordinate the operations of SCU 108 and the information processing elements of System 102, including the transmission from SCU 108 to a processing element of commands directing the execution of Support operations and the transmission from the processing elements to SCU 108 of information resulting from the execution of certain of those operations. The individual control line include, for example, Interrupt Request (IR) Line 680, Support Control Unit Reset (SCUR) Line 682, Support Command Acknowledge (SCA) Line 684, Support Link Clock (SLC) Line 686, Transmit Support Data (TSD) Line 688, and Execute Support Command (XSC) Line 690.

As described above TCD Bus 678 is used to communicate support control data and commands between SCU 108 and the information processing elements of System 102. This information is communicated in the form of 32 bit Target/Command/Data (TCD) Words. It should be noted that, as previously described, TCD Bus 678 is a single bit wide serial bus and SPDR 668 is a 16 bit register. A TCD Word is thereby communicated between SCU 108 and SPDR 668 as two serial transmissions, each of 16 bits. As described below, a TCD Word is accordingly organized into two 16 bit sections, wherein each section contains related information.

Referring to the middle portion of Fig. 2C, a diagrammic representation of the format of a TCD Word is presented therein. As indicated, the first 16 bit section of a TCD Word contains fields identifying the system processor element which is to perform an operation and the operation which is to be performed. For example, the first 10 bits of a TCS Word may contain one or more Target Identification (TI) Fields, each TI Field containing information identifying the intended recipient of a particular TCD Word. For example, bits 8-10 comprise a 3 bit field Central Processor Unit, or PU 104, identification field. This field allows a System 102 to be configured with up to 8 PUs 104 and allows SCU 108 to individually select and communicate with any of the CPUs in a multiple CPU configuration of System 102.

In the present embodiment, the fields of the first 16 bit section which identify an operation to be performed are comprised of a 5 bit Support Command (SC) Field. As stated, the SC Field contains a Support Command Code identifying a particular Support operation to be performed by the recipient element of System 102 identified by the TI Field. In the present example, Support Command Codes (SCs) relevant to CPU 122 include:
- SC00 -: Read 16 bits of microcode from the writeable portion of MCS 640 to SPDR 668, for example, to SCU 108; the particular 16 bits are identified by SC00;
- SC01 -: Read 16 bits from MSRX 670 to the low 16 bits of SPDR 668;
- SC02 -: Read 16 bits from MSRX 670 to the high 16 bits of SPDR 668;
- SC03 -: Read 84 bits (1 microinstruction) of writable control store from MCS 640 to CSI Bus 666; the read address specified by the contents of SRR 656;
- SC04 -: Read the contents of SCR 674 to SPDR 668;
- SC05 -: Read current microinstruction address to MSRX 670;
- SC06 -: Read a location in microinstruction memory specified by the contents of SRR 656 to SPDR 668;
- SC07 -: Spare;
- SC08 -: Write 16 bits of microinstruction from SPDR 668 to the writeable portion of MCS 640; the location is specified by the current microinstruction address and the portion specified by the contents of SCR 674;
- SC09 -: Load the low 16 bits from SPDR 668 to MSRX 670;
- SCOA -: Load the high 16 bits from SPDR 668 to MSRX 670;
- SCOB -: Load 84 bits (1 microinstruction) from CSI 666 to the writeable portion of MCS 640; the address is specified by the contents of SRR 656;
- SCOC -: Load SRR 656 from SPDR 668;
- SCOD -: Load MIAC 664 from SPDR 668;
- SCOE -: Load SCR 674 from SPDR 668;
- SCOF -: Load microinstruction memory from SPDR 668; the address specified by the contents of SRR 656;
- SC10 -: Reset CP 602;
- SC11 -: Select writeable portion of MCS 640 as input to MIGR 644;
- SC12 -: Execute Support Command Function trap operation;
- SC13 -: Execute microinstruction one step at a time (single microinstruction step);
- SC14 -: Execute macroinstruction one step at a time (single macroinstruction step);
- SC15 -: Spare;
- SC16 -: Spare; and,
- SC17 -: Spare.

Note: SC18, SC19, SC1A, SC1B, SV1C, SC1D, SC1E and SC1F are, in the present exemplary system, either spare or are used for MCU 132 or SBI 110 Support Command operations or are used for Floating Point Unit (FPU) Support Command operations.

Finally, the second 16 bit section of a TCD Word comprises an information field which may be used, for example and as described above, to communicate data or microinstructions, or to communicate a 16 bit Support Command Register (SCR) Word. As indicated in the above descriptions of Support Commands and the resulting operations, an SCR Word resides in SCR 674 and contains information pertaining to the current Support operation or operations to be executed.

The SCR Word fields in the present example include:
- IPTR -: A 3 bit field containing a pointer identifying a CPU 122 internal register which is to be a source or destination of an information transfer; for example, the contents of the register may be read to SCU 108, or written by SCU 108;
- EMIC -: A 1 bit field enabling the operation of MIAC 664;
- ECSP -: A 1 bit field enabling parity operations with regard to the contents of MCS 640;
- CMDM -: A 1 bit field indicating that the processing element, that is, CPU 122, is in the Command Mode, that is, is under control of SCU 108; this bit is provided, as described above, to CTDG 658 as a dispatch exception input to transfer control of CPU 122 from the MS 640 microroutines to the Support operation residing in SLC 676; when CMDM is set, the CMDM bit input to CTDG 658 causes MS 604 to enter a dispatch exception loop wherein it may wait for and execute microinstructions or microroutines identified by microinstruction addresses provided by CPU-SLI 606;
- EMIS -: A 1 bit field enabling single microinstruction step operation; and,
- INTR -: A 1 bit field indicating that an interrupt request to SCU 108 is pending.

Having described the structure and information of the TCD and SCR Words, the function and operation of the individual control signals of SL Bus 120 will be described next below.

As previously described, the individual control lines and signals of SL Bus 120 and the Support operations include:
- INTR -: Interrupt Request - An interrupt request to SCU 108 generated by a processing element attached to SL Bus 120 to indicate that the element is requesting service, that is, a Support operation, by SCU 108;
- SCUR -: Support Control Unit Reset- Generated by SCU 108 and monitored by all units connected from SL Bus 120; when asserted by SCU 108, holds all such processor elements in the reset state;
- SLCA -: Support Link Command Acknowledge - Generated by a recipient of a TCD Word to acknowledge that the element has received an XSLC command;
- SLCK -: Support Link Clock - Generated by SCU 108 and used by all elements connected from SL Bus 120 to coordinate communications and operations between the elements and SCU 108; for example, used to clock the bits of a TCD Word into or from an SPDR 668;
- TSLD -: Transmit Support Link Data - Generated by SCU 108 to enable all devices connected from SL Bus 120 to receive information, for example, TCD Words, from TCC Bus 120; asserted TSLD indicates that SCU 108 is transmitting information to all elements; and,
- XSLC -: Execute Support Link Command - Asserted by SCU 108 and monitored by all elements connected from SL Bus 120; asserted by SCU 108 to indicate that the target recipient of a TCS Word will execute the command in its' SCR 674.

Having described the structure and operation of CPU-SLI 606 and SL Bus 120, certain of the Support operations will be described next below.

First considering system initialization, at first power on there will be no microcode or programs resident in the system. The first task of the system, therefore, is to load system microcode into MS 604, initialize the various elements of the system, such as CPU 122, AGU 124 and ATU/C 126, perform system tests, and load and start the first program. These operations are controlled by SCU 108 operating through SL Bus 120 and are performed in three steps: the initiating of Command Mode wherein SCU 108 assumes control of the system to execute the initialization Support operations, the booting of the system, that is, the loading of microcode, and the enabling of program execution..

At the first step, the initiation of Command Mode, SCU 108 performs certain self-test and initialization operations and PU 104 is initialized, by the power on logic, to an initial state. SCU 108 then performs a Support operation to load the Non-Maskable Interrupt (NMI) dispatch exception handler into the writable portion of MCS 640 so that when SCU 108 asserts the Command Mode NMI dispatch exception, CMDM, MS 604 will branch to the NMI handler microroutine.

SCU 108 will then set CMDM, the Command Mode NMI dispatch exception bit in the SCR Word in SCR 674 and will clear SCUR, which was previously set by the power turn on logic. These operations in turn will start running CPU 122's dispatch logic, that is, AGU 124 and CTDG 658, which will try to begin execution of the first macroinstruction of a program. CMDM has been asserted, however, and the system will remain in Command Mode with MS 604 remaining in the Command Mode dispatch exception service loop. While CPU 122 is in the Command Mode dispatch exception service loop, SCU 108 may perform all diagnostic routines and, at the end of these routines, will place CPU 122, including AGU 124 and ATU/C 126, into a direct physical addressing state to open a direct path between CPU 122 and MM 106.

In the second step, the system is booted, that is, microcode is loaded. To perform this operation, SCU i08 will load a microinstruction loader routine into the writable portion of MCS 640 and will write a "boot code" routine into MM 106 through the system bus, that is, SB 114. SCU 108 will then initiate execution of the microinstruction loader routine, which in turn will load the boot loader into MCS 640 and the boot loader will begin execution.

At this point, the system is under control of the operational microcode but will remain in the Command Mode dispatch exception service loop until MM 106 is loaded with a program, that is, macroinstructions. Additionally, SCU 108 will initialize AGU 124 and ATU/C 126 to enable the execution of macroinstructions. Once this is accomplished, and MM 106 has been loaded with macroinstructions, SCU 108 will reset or clear CMDM. The clearing of CMDM in SCR 674 will enable a dispatch to the first macroinstruction, located at a known starting address, which will start the system running in the normal mode of operation.

Having described the initialization of System 102 through SCU 108 and the Support operations, certain of the basic Support operation commands will be described next below.

First, the Support operations provide the capability to load and read microinstructions to and from MCS 640. This operation may be performed, for example, in a diagnostic operation or, as described above, in initialization of CPU 122 and requires that MCS 640 be forced into command mode by the assertion of CMDM.

The basic sequence of operations to perform a write of MCS 640 are comprised of:
Loading SRR 656 with the MCS 640 address to be written to. This is accomplished by writing the address in the 16 bit information field of a TCD Word and issuing the Load SRR 656 command code. And,
Moving the data to be written into MCS 640 from SCU 108 to MCS 640 through a series of TCD Words containing the data, in 16 bit sections, and Load WCSX command codes.

The basic sequence of operations to perform a read of MCS 640 are comprised of:
Loading SRR 656 with the MCS 640 address to be read through a TCD Word containing the address and the Load SRMR command code. And,
Reading the data from MCS 640 to SCU 108 through a sequence of TCS Words containing Read WCSX command code and the data, again in 16 bit sections.

Next, the Support operations were previously described as including the capability of single step execution of microinstructions. This may be performed in either "panel mode", that is, under direct step by step control from SCU 108, or in "program mode", that is, by executing a microroutine a single microinstruction at a time.

CPU 122 must again be forced into Command Mode by the setting of CMDM, as also previously described, and MCS 640 must contain at least the NMI handler. Panel mode single step execution of microinstructions may then be performed by the sequence of operations:
Loading the MCS 640 writeable input/output register with the microinstruction to be executed. And,
Selecting the register containing the microinstruction as the source for the input to MIGR 644.
As soon as the command selecting the MCS 640 register as the source to MIGR 644 is executed, MIGR 644 is jammed with the single microinstruction such that it will be executed regardless of which microinstruction was previously being executed. In order to single step execute microinstructions, therefore, the branch field of the single stepped microinstruction must be coded to return to the NMI handler. It is possible to execute an entire microroutine in this manner, with the last microinstruction linking back to the NMI handler through its' branch field.

In the panel mode single step execution of microinstructions, the microroutine must be resident in MCS 640. The single step execution of the microroutine is then accomplished by setting the Command Mode NMI bit CMDM and setting EMIS and EMIC to enable MIAC 664 to compare for all microinstruction addresses. This will cause CPU 122 to generate an interrupt for each microinstruction that is executed. It should be noted that the trap for interrupt will occur during the actual execution of the current microinstruction pointed to be the microinstruction address contained in XMIA 662.

During this operation, SCU 108 will be interrupted and will read SPDR 668 to determine that the interrupt was caused as a result of single step operation. As long as this operation is enabled, CPU 122 will generate an interrupt for the next microinstruction. That is, CPU 122 will be executing the single step MIAC 664 trap routine and the trap routine will monitor that CPU 122 is in Command Mode. As long as SCU 108 continues to assert Command Mode, the trap routine will continue looping on itself. Once SCU 108 clears the Command Mode, the trap routine will execute a trap return which will "pop" the trap microinstruction address off the stack and point to the microinstruction to be executed.

In further example, it was previously described that the Support operations include the capability to execute single macroinstructions. This operation is accomplished by forcing CPU 122 into the Command Mode and issuing the single step macroinstruction command code. CMDM will cause a NMI dispatch exception which will, in turn, suspend operation of CPU 122, that is, MS 604, at the next macroinstruction boundary. SCU 108 will then issue the single macroinstruction command code, which will effectively remove the Command Mode NMI bit CMDM for one macroinstruction cycle time, allowing the execution of the next macroinstruction, and then set CMDM again to stop execution of the next following macroinstruction.

In a last example, the Support operations provide, through MIAC 664, a microinstruction break-point operation. Again, CPU 122 is put into Command Mode by assertion of CMDM and MIAC 664 is loaded through a Load MIAC command sequence as described above. SCU 108 may then release CPU 122 from Command Mode by clearing CMDM, and operation will begin with MIAC 664 operational. Whenever a microinstruction address occurs which compares with the contents of MIAC 664, MIAC 664 will provide an output which will cause a dynamic trap to force MS 640 to the MIAC 640 trap handler. This trap handler will interrupt SCU 108 and inform SCU 108 of the break-point condition.

## Claims

1. Processing element support means (606) in a data processing system including an external system control means (108) for performing support operations, at least one data processing element (104) including data processing means (122), and support bus means (120) coupled to the external system control means (108) for conducting information between the external system control means (108) and the at least one data processing element (104),
characterized in that
said data processing element (104) further includes microcode control means (604),
said microcode control means (604) includes:
microcode memory means (640) for storing microroutines for controlling non-support operations of the processing means,
means (642, 672) for addressing the microcode memory means (640), and
microinstruction busses interconnecting the microcode memory means (640) and microcode address means (642),
said processing element support means (606) includes:
command register means (668) coupled to the support bus means (120) for transferring command words between the processing element support means (606) and the support bus means (120),
certain of the command words containing control words containing information directing a current mode of operation of the at least one data processing element,
control register means (674) coupled to the command register means (668) for storing a control word,
support microcode means (676) responsive to a command word and to a related control word for providing microroutines for controlling a support operation, and
the processing element microcode control means (604) being responsive to a control word for transferring control of the processing element to the support microcode means (676),
and wherein said processing element support means (606) further includes:
internal bus means (666) coupled between the command register means (668) and the control register means (674) for conducting support operation information,
microinstruction address support means (672) coupled between the internal bus means (666) and the processing element microinstruction address means (642, 672) for providing processing element microinstruction addresses thereto; and wherein
the processing element microcode control means (604) is responsive to microinstruction addresses provided by the microinstruction address support means (672) for executing the corresponding non-support operation microinstructions;
and wherein said processing element support means (606) further includes:
microinstruction address comparison means (664) having a first input coupled to the microcode memory addressing means (642, 672, 662) for receiving a current non-support operation microinstruction address, and a second input coupled to the internal bus means (666) for receiving and storing a comparison microinstruction address, wherein
the microinstruction address comparison means (664) has an output for providing, to the support microcode means (676), an indication of when a current non-support operation microinstruction address compares to a comparison microinstruction address;
and wherein said processing element support means (606) is further characterized in that:
the support microcode means (676) is responsive to a single step microinstruction command and to the indication output of the microinstruction address comparison means for stopping execution of a microroutine at the end of each microinstruction of the microroutine; wherein
the support microcode means (676) is responsive to a single step microroutine command and to the indication output of the microinstruction address comparison means for stopping execution of a microroutine at the end of the microroutine; wherein
the support microcode means (676) is responsive to a single step macroroutine command and to the indication output of the microinstruction address comparison means for stopping execution of a macroroutine at an end of the macroroutine; and wherein
the support microcode means (676) is responsive to a trip point command and to the indication output of the microinstruction address comparison means for stopping execution of a non-support operation at a microinstruction address corresponding to a comparison address.

2. The processing element support means of claim 1 and further characterized in that each command word includes:
a first section containing a target field identifying a recipient processing element, and
a command field identifying a support operation to be executed by the target processing element, and
a second section containing either a control word, or an information field containing information to be communicated as a result of a current support operation.

3. The processing element support means of claim 2, and further characterized in that the information field includes:
a microinstruction address in the processing element microcode control means,
a microinstruction read from or to be written into the processing element microcode control means, or
data read from or to be written into the data processing means.

4. The processing element support means of claim 1 and further characterized in that each control word includes:
a mode field containing a bit for indicating that the processing element is to operate in a command mode, and wherein
operation of the processing element is controlled by the processing element support means.

5. The processing element support means of claim 1, and further characterized in that the support means further includes:
microinstruction read/write means (668,670) coupled to the internal bus means (666) and to the processing element microcode memory means (640) for conducting non-support microinstructions therebetween,
and is responsive to a microinstruction read/write command to execute a microinstruction read/write support operation, and
the processing element microcode control means is responsive to microinstruction read addresses provided by the microinstruction address support means for reading non-support microinstructions from the microcode memory means and for providing non-support microinstructions to the internal bus means, and
the processing element microcode control means is responsive to microinstruction write addresses provided by the microinstruction address support means for writing non-support microinstructions from the internal bus means to the microcode memory means.

6. The processing element support means of claim 1, and further characterized in that the support bus means includes:
a support information bus (678), and
a plurality of support control busses (680, 682, 684, 686, 688, 690), and
the command register means is coupled to the support information bus, and
the support microcode means is coupled to the support control busses, wherein
the support information bus is a single bit serial bus,
the processing element support means further includes internal bus means (666) coupled to the command register means and to the control register means for conducting support operation information, the internal bus means is a bidirectional multi-bit parallel bus, and
the command register means has a bidirectional single bit serial connection from the information bus, a bidirectional multi-bit parallel connection from the internal bus means, and operates as a serial register with respect to the support information bus, and operates as a parallel register with respect to the internal bus means; and wherein
each command word includes a first section containing a target field identifying a recipient processing element, and
a command field identifying a support operation to be executed by the target processing element, and
a second section containing either a control word, or an information field containing information to be communicated as a result of a current support operation, and wherein
a command word is communicated through the support information bus in a first serial transmission of the first section and a following serial transmission of the second section.

7. The processing element support means of claim 1, and further characterized in that the support bus means includes:
a support link clock bus (686) for conducting a clock signal for coordinating operation of the system control means and the processing element support means,
a transmit support link data bus (688) for conducting a signal indicating that the system control means is transmitting a command word,
an execute support command bus (690) for conducting a signal indicating that the processing element support means is to execute a support operation specified in a command word,
a support link acknowledgement bus (684) for conducting a signal acknowledging that the processing element support means has received an execute command signal through the execute support command bus,
a support reset bus (682) for conducting a signal that indicates that the processing element support means is to place the processing means in a reset state, and
an interrupt request bus (680) for conducting a signal indicating that the processing element support means is requesting that the system control means execute a support operation, and wherein
the processing element support means is responsive to:
the clock signal for coordinating its operation with the system control means,
a transmit support link data signal for receiving a command word,
an execute support command signal for executing a support operation specified in a command word, and
transmitting a support link acknowledgement signal acknowledging that the processing element support means has received the execute command signal,
a support reset signal for placing the processing means in a reset state, and
to operation of the processing element and the processing means support means to provide an interrupt request signal to request that the system control means execute a support operation.

## Patentansprüche

1. Verarbeitungsorgan-Unterstützungseinrichtung (606) in einer Datenverarbeitungsanlage mit einer externen Systemsteuerung (108) zum Ausführen von Unterstützungsoperationen, wenigstens einem Datenverarbeitungsorgan (104) mit einer Datenverarbeitungseinrichtung (122), und einem Unterstützungsbus (120), der mit der externen Systemsteuerung (108) zum Übertragen von Informationen zwischen der externen Systemsteuerung (108) und dem wenigstens einen Datenverarbeitungsorgan (104) verbunden ist, dadurch gekennzeichnet, daß
das Datenverarbeitungsorgan (104) ferner eine Mikrocode-Steuerung (604) aufweist,
die Mikrocode-Steuerung (604) umfaßt:
einen Mikrocode-Speicher (640) zum Speichern von Mikroroutinen zum Steuern von Operationen ohne Unterstützung der Verarbeitungseinrichtung,
eine Einrichtung (642, 672) zum Adressieren des Mikrocode-Speichers (640), und
Mikrobefehl-Busse, die den Mikrocode-Speicher (640) mit einer Mikrocode-Adresseneinrichtung (642) verbinden,
die Verarbeitungsorgan-Unterstützungseinrichtung (606) umfaßt:
ein Befehlsregister (668), das mit dem Unterstützungsbus (120) zum Übertragen von Befehlswörtern zwischen der Verarbeitungsorgan-Unterstützungseinrichtung (606) und dem Unterstützungsbus (120) verbunden ist,
wobei bestimmte Befehlswörter, die Steuerwörter enthalten, welche Informationen enthalten, die eine laufende Betriebsart des wenigstens einen Datenverarbeitungsorgans bestimmen,
ein Steuerregister (674), das mit dem Befehlsregister (668) zum Speichern eines Steuerwortes verbunden ist,
einer Unterstützungs-Mikrocode-Einrichtung (676), die in Abhängigkeit von einem Befehlswort und einem zugehörigen Steuerwort Mikroroutinen zum Steuern einer Unterstützungsoperation bereitstellt, und
die Mikrocode-Steuerung (604) des Verarbeitungsorgans in Abhängigkeit von einem Steuerwort die Steuerung des Verarbeitungsorgans auf die Unterstützungs-Mikrocode-Einrichtung (676) überträgt,
und bei der die Verarbeitungsorgan-Unterstützungseinrichtung (606) ferner umfaßt:
einen internen Bus (666), der mit dem Befehlsregister (668) und dem Steuerregister (674) zum Übertragen von Informationen zu einer Unterstützungsoperation verbunden ist,
eine Mikrobefehladressen-Unterstützungseinrichtung (672), die mit dem internen Bus (666) und der Mikrobefehladressen-Einrichtung (642, 672) des Verarbeitungsorgans zum Bereitstellen von Mikrobefehladressen für das Verarbeitungsorgans an jene verbunden ist, und wobei
die Mikrocode-Steuerung (604) des Verarbeitungsorgans in Abhängigkeit von Mikrobefehladressen, welche die Mikrobefehladressen-Unterstützungseinrichtung (672) bereitstellt, die entsprechenden Mikrobefehle für Operationen ohne Unterstützung ausführt,
und bei der die Verarbeitungsorgan-Unterstützungseinrichtung (606) ferner umfaßt:
eine Mikrobefehladressen-Vergleichseinrichtung (664) mit einem ersten Eingang, der mit der Adresseneinrichtung (642, 672, 662) des Mikrocode-Speichers zum Empfangen einer Mikrobefehladresse für eine laufende Operation ohne Unterstützung verbunden ist, und einem zweiten Eingang, der mit dem internen Bus (666) zum Empfangen und Speichern einer Vergleichs-Mikrobefehladresse verbunden ist, wobei
die Mikrobefehladressen-Vergleichseinrichtung (664) einen Ausgang aufweist, um der Unterstützungs-Mikrocode-Einrichtung (676) eine Angabe zu liefern, wenn eine Mikrobefehladresse für eine laufende Operation ohne Unterstützung mit einer Vergleichs- Mikrobefehladresse gleich ist,
und bei der die Verarbeitungsorgan-Unterstützungseinrichtung (606) ferner dadurch gekennzeichnet ist, daß
die Unterstützungs-Mikrocode-Einrichtung (676) in Abhängigkeit von einem Befehl zu einem Einschritt-Mikrobefehl und von der von der Mikrobefehladressen-Vergleichseinrichtung ausgegebenen Angabe die Ausführung einer Mikroroutine am Ende jedes Mikrobefehls der Mikroroutine unterbricht, wobei
die Unterstützungs-Mikrocode-Einrichtung (676) in Abhängigkeit von einem Befehl zu einer Einschritt-Mikroroutine und von der von der Mikrobefehladressen-Vergleichseinrichtung ausgegebenen Angabe die Ausführung einer Mikroroutine am Ende der Mikroroutine unterbricht, wobei
die Unterstützungs-Mikrocode-Einrichtung (676) in Abhängigkeit von einem Befehl zu einer Einschritt-Makroroutine und von der von der Mikrobefehladressen-Vergleichseinrichtung ausgegebenen Angabe die Ausführung einer Makroroutine an einem Ende der Makroroutine unterbricht, und wobei
die Unterstützungs-Mikrocode-Einrichtung (676) in Abhängigkeit von einem Auslösepunkt-Befehl und von der von der Mikrobefehladressen-Vergleichseinrichtung ausgegebenen Angabe die Ausführung einer Operation ohne Unterstützung an einer Mikrobefehladresse unterbricht, die einer Vergleichsadresse entspricht.

2. Verarbeitungsorgan-Unterstützungseinrichtung nach Anspruch 1,
ferner dadurch gekennzeichnet, daß jedes Befehlswort enthält:
einen ersten Teil, der ein Zielfeld enthält, das ein empfangendes Verarbeitungsorgan bezeichnet, und
ein Befehlsfeld, das eine Unterstützungsoperation bezeichnet, die vom Ziel-Verarbeitungsorgan auszuführen ist, und
einen zweiten Teil, der entweder ein Befehlswort oder ein Informationsfeld enthält, das Informationen enthält, die als Folge einer laufenden Unterstützungsoperation weiterzuleiten sind.

3. Verarbeitungsorgan-Unterstützungseinrichtung nach Anspruch 2,
ferner dadurch gekennzeichnet, daß das Informationsfeld enthält:
eine Mikrobefehladresse in der Verarbeitungsorgan-Mikrocodesteuerung,
einen Mikrobefehl, der aus der Verarbeitungsorgan-Mikrocodesteuerung ausgelesen oder in diese einzuschreiben ist, oder
Daten, die aus der Datenverarbeitungseinrichtung ausgelesen oder in diese einzuschreiben sind.

4. Verarbeitungsorgan-Unterstützungseinrichtung nach Anspruch 1,
ferner dadurch gekennzeichnet, daß jedes Steuerwort enthält:
ein Modenfeld, das ein Bit enthält zum Anzeigen, daß das Verarbeitungsorgan in einem Kommandomodus arbeiten soll, und wobei
die Arbeitsweise des Verarbeitungsorgans durch die Verarbeitungsorgan-Unterstützungseinrichtung gesteuert wird.

5. Verarbeitungsorgan-Unterstützungseinrichtung nach Anspruch 1,
ferner dadurch gekennzeichnet, daß die Unterstützungseinrichtung ferner aufweist:
eine Mikrobefehl-Schreib/Lese-Einrichtung (668, 670), die mit dem internen Bus (666) und mit dem Mikrocode-Speicher (640) des Verarbeitungsorgans zum Übertragen von Mikrobefehlen ohne Unterstützung zwischen ihnen verbunden ist,
und in Abhängigkeit von einem Mikrobefehl-Lese/Schreib-Befehl eine Mikrobefehl-Lese/Schreib-Unterstützungsoperation ausführt, und
die Verarbeitungsorgan-Mikrocodesteuerung in Abhängigkeit von Mikrobefehl-Leseadressen, die von der Mikrobefehladressen-Unterstützungseinrichtung bereitgestellt werden, Mikrobefehle ohne Unterstützung aus dem Mikrocode-Speicher liest, und Mikrobefehle ohne Unterstützung dem internen Bus bereitstellt, und
die Verarbeitungsorgan-Mikrocodesteuerung in Abhängigkeit von Mikrobefehl-Schreibadressen, die von der Mikrobefehladressen-Unterstützungseinrichtung bereitgestellt werden, Mikrobefehle ohne Unterstützung vom internen Bus in den Mikrocode-Speicher schreibt.

6. Verarbeitungsorgan-Unterstützungseinrichtung nach Anspruch 1,
ferner dadurch gekennzeichnet, daß der Unterstützungsbus aufweist:
einen Unterstützungs-Informationsbus (678) und
eine Vielzahl Unterstützungs-Steuerbusse (680, 682, 684, 686, 688, 690), und
das Befehlsregister mit dem Unterstützungs-Informationsbus verbunden ist, und
die Unterstützungs-Mikrocode-Einrichtung mit den Unterstützungs-Steuerbussen verbunden ist, wobei
der Unterstützungs-Informationsbus ein serieller 1-Bit-Bus ist,
die Verarbeitungsorgan-Unterstützungseinrichtung ferner einen internen Bus (666) aufweist, der mit dem Befehlsregister und dem Steuerregister zum Übertragen von Informationen bezüglich Unterstützungsoperationen verbunden ist,
der interne Bus ein bidirektionaler paralleler Mehrbit-Bus ist, und das Befehlsregister eine bidirektionale serielle Einzelbit-Verbindung vom Informationsbus, eine bidirektionale parallele Mehrbit-Verbindung vom internen Bus hat und bezüglich des Unterstützungs-Informationsbusses als serielles Register und bezüglich des internen Busse als paralleles Register arbeitet, und wobei
jedes Befehlswort einen ersten Teil enthält, der ein Zielfeld enthält, das ein empfangendes Verarbeitungsorgan bezeichnet, und
ein Befehlsfeld, das eine Unterstützungsoperation bezeichnet, die durch das Ziel-Verarbeitungsorgan auszuführen ist, und
einen zweiten Teil, der entweder ein Steuerwort oder ein Informationsfeld enthält, das Informationen enthält, die als Folge einer laufenden Unterstützungsoperation zu übermitteln sind, und wobei
ein Befehlswort durch den Unterstützungs-Informationsbus in einer ersten seriellen Übertragung des ersten Teils und einer folgenden seriellen Übertragung des zweiten Teils übermittelt wird.

7. Verarbeitungsorgan-Unterstützungseinrichtung nach Anspruch 1,
ferner dadurch gekennzeichnet, daß der Unterstützungsbus aufweist:
ein Unterstützungs-Verknüpfungs-Takt-Bus (686) zum Übertragen eines Taktsignals zum Koordinieren der Operation der Systemsteuerung und der Verarbeitungsorgan-Unterstützungseinrichtung,
einen Übertrage-Unterstützungs-Verknüpfungsdaten-Bus (688) zum Übertragen eines Signals, das angibt, daß die Systemsteuerung ein Befehlswort übermittelt,
einen Ausführe-Unterstützungsbefehl-Bus (690) zum Übertragen eines Signals, das angibt, daß die Verarbeitungsorgan-Unterstützungseinrichtung eine in einem Befehlswort vorgeschriebene Unterstützungsoperation ausführen soll,
einen Unterstützungs-Verknüpfungs-Quittierungs-Bus (684) zum Übertragen eines Signals, das quittiert, daß die Verarbeitungsorgan-Unterstützungseinrichtung ein Ausführe-Befehl-Signal durch den Ausführe-Unterstützungsbefehl-Bus empfangen hat,
einen Unterstützungs-Rücksetz-Bus (682)zum Übertragen eines Signals, das angibt, daß die Verarbeitungsorgan-Unterstützungseinrichtung die Verarbeitungseinrichtung in einen Rücksetz-Zustand verbringen soll, und
einen Unterbrechungs-Anforderungs-Bus (680) zum Übertragen eines Signals, das angibt, daß die Verarbeitungsorgan-Unterstützungseinrichtung die Systemsteuerung auffordert, eine Unterstützungsoperation auszuführen, und wobei
die Verarbeitungsorgan-Unterstützungseinrichtung
in Abhängigkeit vom Taktsignal ihre Arbeitsweise mit der Systemsteuerung koordiniert,
in Abhängigkeit von einem Übertrage-Unterstützungs-Verknüpfungs-Daten-Signal ein Befehlswort empfängt,
in Abhängigkeit von einem Ausführe-Unterstützungsbefehl-Signal eine in einem Befehlswort vorgeschriebene Unterstützungsoperation ausführt, und
ein Unterstützungs-Verknüpfungs-Quittierungs-Signal überträgt, das bestätigt, daß die Verarbeitungsorgan-Unterstützungseinrichtung das Ausführe-Befehl-Signal empfangen hat,
in Abhängigkeit von einem Unterstützungs-Rücksetz-Signal die Verarbeitungseinrichtung in einen rückgesetzten Zustand verbringt, und
in Abhängigkeit von der Arbeitsweise des Verarbeitungsorgans und der Unterstützungseinrichtung der Verarbeitungseinrichtung ein Unterbrechungs-Anforderungs-Signal bereitstellt, das die Systemsteuerung auffordert, eine Unterstützungsoperation auszuführen.

## Revendications

1. Moyen d'assistance (606) d'élément de traitement dans un système informatique comprenant un moyen extérieur de commande de système (108) pour effectuer des opérations d'assistance, au moins un élément de traitement de données (104) comprenant un moyen de traitement de données (122), et un moyen de bus d'assistance (120) couplé au moyen extérieur de commande de système (108) pour acheminer l'information entre le moyen extérieur de commande de système (108) et ledit au moins un élément de traitement de données (104),
caractérisé en ce que
ledit élément de traitement de données (104) comprend de plus un moyen de commande de microcode (604),
ledit moyen de commande de microcode (604) comprend :
un moyen de mémoire de microcode (640) pour enregistrer des microroutines pour commander des opérations autres que d'assistance du moyen de traitement,
un moyen (642, 672) pour adresser le moyen de mémoire de microcode (640), et
des bus de microinstructions interconnectant le moyen de mémoire de microcode (640) et le moyen d'adresse de microcode (642),
ledit moyen d'assistance d'élément de traitement (606) comprend:
un moyen de registre d'ordre (668) couplé au moyen de bus d'assistance (120) pour transférer des mots d'ordre entre le moyen d'assistance d'élément de traitement (606) et le moyen de bus d'assistance (120),
certains des mots de commande contenant des mots d'ordre contenant une information dirigeant un mode de fonctionnement en cours dudit au moins un élément de traitement de données,
un moyen de registre de commande (674) couplé au moyen de registre d'ordre (668) pour enregistrer un mot de commande,
un moyen de microcode d'assistance (676) réagissant à un mot d'ordre et à un mot de commande relatif pour fournir des microroutines pour commander une opération d'assistance, et
le moyen de commande de microcode de l'élément de traitement (604) réagissant à un mot de commande pour transférer la commande de l'élément de traitement au moyen de microcode d'assistance (676),
et dans lequel ledit moyen d'assistance d'élément de traitement (606) comprend de plus :
un moyen de bus interne (666) couplé entre le moyen de registre d'ordre (668) et le moyen de registre de commande (674) pour acheminer l'information d'opération d'assistance,
un moyen d'assistance d'adresse de microinstruction (672) couplé entre le moyen de bus interne (666) et le moyen d'adresse de microinstruction d'élément de traitement (642, 672) pour lui fournir des adresses de microinstruction d'élément de traitement; et dans lequel le moyen de commande de microcode d'élément de traitement (604) réagit à des adresses de microinstruction fournies par le moyen d'assistance d'adresse de microinstruction (672) pour exécuter les microinstructions correspondantes d'opération autre que d'assistance;
et dans lequel ledit moyen d'assistance d'élément de traitement (606) comprend de plus :
un moyen de comparaison d'adresse de microinstruction (664) ayant une première entrée couplée au moyen d'adressage de mémoire de microcode (642, 672, 662) pour recevoir une adresse de microinstruction d'opération autre que d'assistance en cours, et une deuxième entrée couplée au moyen de bus interne (666) pour recevoir et enregistrer une adresse de microinstruction de comparaison, dans lequel
le moyen de comparaison d'adresse de microinstruction (664) a une sortie pour fournir, au moyen de microcode d'assistance (676), une indication de l'instant où une adresse de microinstruction d'opération autre que d'assistance est comparable à une adresse de microinstruction de comparaison;
et dans lequel ledit moyen d'assistance d'élément de traitement (606) est de plus caractérisé en ce que :
le moyen de microcode d'assistance (676) réagit à un ordre de microinstruction d'un seul pas et à la sortie d'indication du moyen de comparaison d'adresse de microinstruction pour arrêter l'exécution d'une microroutine à la fin de chaque microinstruction de la microroutine; dans lequel
le moyen de microcode d'assistance (676) réagit à un ordre de microroutine d'un seul pas et à la sortie d'indication du moyen de comparaison d'adresse de microinstruction pour arrêter l'exécution d'une microroutine à la fin de la microroutine; dans lequel
le moyen de microcode d'assistance (676) réagit à un ordre de macroroutine d'un seul pas et à la sortie d'indication du moyen de comparaison d'adresse de microinstruction pour arrêter l'exécution d'une macroroutine à une fin de la macroroutine; et dans lequel
le moyen de microcode d'assistance (676) réagit à un ordre de point de déclenchement et à la sortie d'indication du moyen de comparaison d'adresse de microinstruction pour arrêter l'exécution d'une opération autre que d'assistance à une adresse de microinstruction correspondant à une adresse de comparaison.

2. Moyen d'assistance d'élément de traitement selon la revendication 1 et caractérisé de plus en ce que chaque mot de commande comprend :
une première section contenant une zone de cible identifiant un élément de traitement récepteur, et
une zone d'ordre identifiant une opération d'assistance à exécuter par l'élément de traitement destinataire, et
une deuxième section contenant soit un mot d'ordre, soit une zone d'information contenant une information à communiquer comme résultat d'une opération d'assistance en cours.

3. Moyen d'assistance d'élément de traitement selon la revendication 2 et caractérisé de plus en ce que la zone d'information comprend :
une adresse de microinstruction dans le moyen de commande de microcode d'élément de traitement,
une microinstruction lue du ou à écrire dans le moyen de commande de microcode d'élément de traitement, ou
des données lues du ou à écrire dans le moyen de traitement de données.

4. Moyen d'assistance d'élément de traitement selon la revendication 1 et caractérisé de plus en ce que chaque mot de commande comprend :
une zone de mode contenant un bit pour indiquer que l'élément de traitement doit fonctionner en mode de commande, et dans lequel
le fonctionnement de l'élément de traitement est commandé par le moyen d'assistance d'élément de traitement.

5. Moyen d'assistance d'élément de traitement selon la revendication 1 et caractérisé de plus en ce que le moyen d'assistance comprend de plus :
un moyen de lecture / écriture de microinstruction (668, 670) couplé au moyen de bus interne (666) et au moyen de mémoire de microcode d'élément de traitement (640) pour acheminer des microinstructions autres que d'assistance entre ceux-ci,
et réagit à un ordre de lecture / écriture de microinstruction pour exécuter une opération d'assistance de lecture / écriture de microinstruction, et
le moyen de commande de microcode d'élément de traitement réagit aux adresses de lecture de microinstruction fournies par le moyen d'assistance d'adresse de microinstruction pour lire des microinstructions autres que d'assistance en provenance du moyen de mémoire de microcode et pour fournir des microinstructions autres que d'assistance au moyen de bus interne, et
le moyen de commande de microcode d'élément de traitement réagit à des adresses d'écriture de microinstruction fournies par le moyen d'assistance d'adresse de microinstruction pour écrire des microinstructions autres que d'assistance du moyen de bus interne dans le moyen de mémoire de microcode.

6. Moyen d'assistance d'élément de traitement selon la revendication 1 et caractérisé de plus en ce que le moyen de bus d'assistance comprend :
un bus d'information d'assistance (678), et
une pluralité de bus de commande d'assistance (680, 682, 684, 686, 688, 690), et
le moyen de registre d'ordre est couplé au bus d'information d'assistance, et
le moyen de microcode d'assistance est couplé aux bus de commande d'assistance, dans lequel
le bus d'information d'assistance est un bus sériel par bit simple,
le moyen d'assistance d'élément de traitement comprend de plus un moyen de bus interne (666) couplé au moyen de registre d'ordre et au moyen de registre de commande pour acheminer l'information d'opération d'assistance,
le moyen de bus interne est un bus parallèle bidirectionnel à plusieurs bits, et
le moyen de registre d'ordre possède une connexion sérielle par bit simple bidirectionnelle en provenance du bus d'information, une connexion parallèle à plusieurs bits bidirectionnelle en provenance du moyen de bus interne, et fonctionne comme un registre sériel par rapport au bus d'information d'assistance, et fonctionne comme un registre parallèle par rapport au moyen de bus interne; et dans lequel
chaque mot d'ordre comprend une première section contenant une zone de cible identifiant un élément de traitement récepteur, et
une zone d'ordre identifiant une opération d'assistance à exécuter par l'élément de traitement cible, et
une deuxième section contenant soit un mot d'ordre, soit une zone d'information contenant une information à communiquer comme résultat d'une opération d'assistance en cours, et dans lequel
un mot d'ordre est communiqué par le bus d'information d'assistance dans une première transmission sérielle de la première section et une transmission sérielle suivante de la deuxième section.

7. Moyen d'assistance d'élément de traitement selon la revendication 1 et caractérisé de plus en ce que le moyen de bus d'assistance comprend :
un bus d'horloge de liaison d'assistance (686) pour acheminer un signal d'horloge pour coordonner le fonctionnement du moyen de commande de système et du moyen d'assistance d'élément de traitement,
un bus de données de liaison d'assistance de transmission (688) pour acheminer un signal indiquant que le moyen de commande de système transmet un mot d'ordre,
un bus d'ordre d'assistance d'exécution (690) pour acheminer un signal indiquant que le moyen d'assistance d'élément de traitement doit exécuter une opération d'assistance spécifiée dans un mot d'ordre,
un bus d'accusé de réception de liaison d'assistance (684) pour acheminer un signal attestant que le moyen d'assistance d'élément de traitement a reçu un signal d'ordre d'exécution par le bus d'ordre d'assistance d'exécution,
un bus de remise à l'état initial d'assistance (682) pour acheminer un signal qui indique que le moyen d'assistance d'élément de traitement doit placer le moyen de traitement dans un état de remise à l'état initial, et
un bus de demande d'interruption (680) pour acheminer un signal indiquant que le moyen d'assistance d'élément de traitement demande que le moyen de commande de système exécute une opération d'assistance, et dans lequel
le moyen d'assistance d'élément de traitement réagit :
au signal d'horloge pour coordonner son fonctionnement avec le moyen de commande de système,
à un signal de données de liaison d'assistance de transmission pour recevoir un mot d'ordre,
à un signal d'ordre d'assistance d'exécution pour exécuter une opération d'assistance spécifiée dans un mot d'ordre, et
transmettre un signal d'accusé de réception de liaison d'assistance attestant que le moyen d'assistance d'élément de traitement a reçu le signal d'ordre d'exécution,
à un signal de remise à l'état initial d'assistance pour mettre le moyen de traitement dans un état de remise à l'état initial, et
au fonctionnement de l'élément de traitement et du moyen d'assistance de moyen de traitement pour fournir un signal de demande d'interruption pour demander que le moyen de commande de système exécute une opération d'assistance.
